(19) Europäisches Patentamt
European Patent Office
Office européen des brevets

(11) **EP 3 440 243 B2**

(12) **NEW EUROPEAN PATENT SPECIFICATION**
After opposition procedure

(45) Date of publication and mention
of the opposition decision:
**28.05.2025   Bulletin 2025/22**

(45) Mention of the grant of the patent:
**22.06.2022   Bulletin 2022/25**

(21) Application number: **16723237.0**

(22) Date of filing: **04.04.2016**

(51) International Patent Classification (IPC):
**D01F 6/60** (2006.01)      **D01F 1/10** (2006.01)

(52) Cooperative Patent Classification (CPC):
(C-Sets available)
**C08L 77/02; C08L 77/06; D01F 1/10; D01F 6/60;**
**C08K 5/0033**                              (Cont.)

(86) International application number:
**PCT/IB2016/000432**

(87) International publication number:
**WO 2016/079724 (26.05.2016 Gazette 2016/21)**

(54) **BIODEGRADABLE POLYAMIDE FIBER, PROCESS FOR OBTAINING SUCH FIBER AND POLYAMIDE ARTICLE MADE THEREFROM**

BIOLOGISCH ABBAUBARE POLYAMIDFASER, VERFAHREN ZUR HERSTELLUNG SOLCH EINER FASER UND DARAUS HERGESTELLTER POLYAMIDARTIKEL

FIBRE POLYAMIDE BIODÉGRADABLE, PROCÉDÉ D'OBTENTION D'UNE TELLE FIBRE ET ARTICLE EN POLYAMIDE FABRIQUÉ À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.02.2019   Bulletin 2019/07**

(73) Proprietor: **Rhodia Poliamida e Especialidades S.A.**
**CEP 05804-902 Sao Paulo - SP (BR)**

(72) Inventors:
• REDONDO BONALDI, Renata
09070-100 São Paulo - SP (BR)
• GORESCU, Gabriel
04269-001 São Paulo - SP (BR)
• HANSU PAK, Pierre
09820-540 São Bernardo do Campo - SP (BR)
• MACRET, Richard
01232020 São Paulo - SP (BR)

(74) Representative: **Kraus & Lederer PartGmbB**
**Thomas-Wimmer-Ring 15**
**80539 München (DE)**

(56) References cited:
EP-A1- 2 554 721          EP-A1- 2 554 721
EP-A1- 2 842 406          WO-A1-2008/055240
WO-A1-2014/036279      CN-A- 1 490 443

CN-A- 1 743 516          CN-A- 103 668 536
CN-A- 103 668 553        JP-A- 2006 132 041
JP-B2- 3 554 620          JP-B2- 4 256 243
JP-B2- 5 549 244          US-A- 5 922 830
US-A1- 2004 225 269      US-A1- 2005 260 911
US-A1- 2008 103 232      US-A1- 2008 103 232
US-A1- 2013 280 513      US-A1- 2014 003 026
US-B2- 7 097 904          US-B2- 9 012 573

• SHAH SACHIN: "Enhanced Biodegradation of Plastic With eco one", ECOLOGIC-LLC, 5 October 2011 (2011-10-05), pages 1 - 21, XP055699957
• ISABELLE VROMAN, LAN TIGHZERT: "Biodegradable Polymers", MATERIALS, vol. 2, no. 2, 1 June 2009 (2009-06-01), pages 307 - 344, XP055202472, DOI: 10.3390/ma2020307
• ANONYMOUS: "A world without platsic - hard to imagine", 1 January 2014 (2014-01-01), pages 1 - 6, XP093084625, Retrieved from the Internet <URL:http://www.ftc.gov/sites/default/files/documents/cases/140106carniecaexhibits.pdf> [retrieved on 20230922]
• ANONYMOUS: "Ecologic is setting a new standard for the biodegradation of plastics", 3 April 2016 (2016-04-03), pages 1 - 2, XP093083291, Retrieved from the Internet <URL:web.archive.org.web/20160403044333// http:/ecologic-llc.com/success-stories/plastic-applications/>

- ANONYMOUS: "Types of Biodegradable plastics", 29 March 2016 (2016-03-29), pages 1 - 3, XP093083756, Retrieved from the Internet <URL:web.archive.org/web/20160329155601/ http://www.goecopure.com/types-of-plastics. aspx>
- GHANI MOZHDEH, GHAREHAGHAJI ALI AKBAR, ARAMI MOKHTAR, TAKHTKUSE NEGAR, REZAEI BABAK: "Fabrication of Electrospun Polyamide-6/Chitosan Nanofibrous Membrane toward Anionic Dyes Removal", JOURNAL OF NANOTECHNOLOGY, HINDAWI, vol. 2014, 16 February 2014 (2014-02-16), pages 1 - 12, XP093083322, ISSN: 1687-9503, DOI: 10.1155/ 2014/278418
- "Woven Fabrics", 16 May 2012, INTECH , ISBN: 978-953-51-0607-4, article GUTAROWSKA BEATA, MICHALSKI ANDRZEJ: "Microbial Degradation of Woven Fabrics and Protection Against Biodegradation", pages: 267 - 296, XP093083329, DOI: 10.5772/38412
- KRUEGER MARTIN C.; HARMS HAUKE; SCHLOSSER DIETMAR: "Prospects for microbiological solutions to environmental pollution with plastics", APPLIED MICROBIOLOGY AND BIOTECHNOLOGY, vol. 99, no. 21, 30 August 2015 (2015-08-30), Berlin/ Heidelberg, pages 8857 - 8874, XP035574891, ISSN: 0175-7598, DOI: 10.1007/ s00253-015-6879-4
- KATARZYNA LEJA: "Polymer biodegradation and biodegradable polymers-a review", POLISH JOURNAL OF ENVIRONMENTAL STUDIES, vol. 19, no. 2, 1 January 2010 (2010-01-01), PL , pages 255 - 266, XP055463082, ISSN: 1230-1485
- OKADA M: "Chemical syntheses of biodegradable polymers", PROGRESS IN POLYMER SCIENCE, vol. 27, no. 1, 1 February 2002 (2002-02-01), GB , pages 87 - 133, XP009123115, ISSN: 0079-6700
- DHRUBO JYOTI, SEN, PATEL PARTH N, PARMAR KHUSHBOO G, NAKUM ALPESH N, PATEL MITUL N, PATEL R, PATEL VANITA R: "Biodegradable Polymers: An Ecofriendly Approach In Newer Millenium", ASIAN JOURNAL OF BIOMEDICAL AND PHARMACEUTICAL SCIENCES, vol. 1, no. 3, 1 January 2011 (2011-01-01), pages 23 - 39, XP093083373, ISSN: 2249-622X
- RYDZ JOANNA, SIKORSKA WANDA, KYULAVSKA MARIYA, CHRISTOVA DARINKA: "Polyester-Based (Bio)degradable Polymers as Environmentally Friendly Materials for Sustainable Development", INTERNATIONAL JOURNAL OF MOLECULAR SCIENCES, vol. 16, no. 1, 1 January 2015 (2015-01-01), pages 564 - 596, XP093083379, DOI: 10.3390/ijms16010564
- YUTAKA TOKIWA , BUENAVENTURADA P. CALABIA , CHARLES U. UGWU AND SEIICHI AIBA: "Biodegradability of plastics.", INTERNATIONAL JOURNAL OF MOLECULAR SCIENCES, vol. 10, no. 9, 1 September 2009 (2009-09-01), Basel, CH , pages 3722 - 3742, XP002684789, ISSN: 1422-0067, DOI: 10.3390/IJMS10093722
- PARK CHUNGHEE, KIM EUN YOUNG, YOO YOUNG TAI, IM SEUNG SOON: "Effect of hydrophilicity on the biodegradability of polyesteramides", JOURNAL OF APPLIED POLYMER SCIENCE, vol. 90, no. 10, 5 December 2003 (2003-12-05), US , pages 2708 - 2714, XP093083383, ISSN: 0021-8995, DOI: 10.1002/app.12925
- ANONYMOUS: "How ECO-ONE® Works", 5 February 2022 (2022-02-05), pages 1 - 1, XP093083386, Retrieved from the Internet <URL:https://ecologic-llc.com/product/ how-eco-one-works> [retrieved on 20230919]
- Linked in page of Ecologic LLC
- Experimental data - Water sorption testing via VTI-SA
- Declaration of Sagee Eran relating to the experimental data
- Affidavit of Guainumbi Medeiros

(52) Cooperative Patent Classification (CPC): (Cont.)

C-Sets
C08L 77/02, C08L 39/06;
C08L 77/02, C08L 67/02;
C08L 77/06, C08L 39/06;
C08L 77/06, C08L 67/02

## EP 3 440 243 B2

**Description**

ABSTRACT

The present invention relates to a biodegradable polyamide fiber. The present invention also discloses a method for obtaining such fiber and articles made therefrom. The biodegradable polyamide fiber of the invention can be obtained by adding a biodegradation agent during the melt-spinning extrusion of a specific polyamide described below.

BACKGROUND

Sustainability, shorter life-cycle, low environmental impact, renewable resources and green chemistry are new principles that are guiding the development of the next generation of materials, products and processes. There is an increasing worldwide effort in the development of sustainable products that are biodegradable, and as often as possible made of renewable resources (biobased) and with a much shorter life-cycle and environmental impact.

Biodegradable polymers have been developed and commercialized lately such as starch-based polymers, polylactic acid (PLA), poly(lactic-co-glycolic acid) (PLGA), polypropylene carbonate (PPC), polycaprolactone (PCL), polyhydroxyalkanoate (PHA), chitosan, gluten, polyesters such as polybutylene succinate (PBS), polybutylene adipate (PBA), polybutylene succinate-adipate, polybutylene succinate-sebacate, or polybutylene terephthalate-coadipate.

Several attempts have been made to enhance the biodegradation of polymers in general, for instance, blending the polymer with biodegradable polymers such as PLA, PVA, starch, natural fibers or biodegradable polyester, or by incorporating biodegradable additives during the polymerization and/or extrusion in order to render them biodegradable, such as by adding oxo-biodegradable additives, hydroperoxides, microorganisms, prodegradants and "chemo attractant" additives. The oxo-biodegradable additives and prodegradants tend to reduce the mechanical and chemical properties of the polymer during their life-time as they accelerate photo and oxygen degradation. Furthermore, they are mainly composed of transition metals, causing ecotoxicity problems to the environment. Therefore, they are not appropriate for textile applications.

In addition, polymers such as PLA, PHB, PHA, Starch-based polymers and so forth, do not offer high mechanical and chemical properties owing to their low melting point, low resistance to hydrolysis, higher photo and thermal degradation, and they are also brittle and water-soluble. Therefore, they do not offer adequate properties for textile applications, and tend to lose their mechanical properties during the life-time of the textile article. In addition, naturally biobased and highly biodegradable fibers such as cotton, wool and silk do not provide the desired properties offered by synthetic fibers such as the durability, strength and thermoplastic behavior. That's why there is a demand for increasing the biodegradability of polymers, especially polyamides due to its outstanding mechanical and chemical properties.

The commercial interest in polyamides, particularly based on fibers and yarns used in textile goods such as underwear, sportswear, leisurewear and nightwear, has been extensively increased because of theirs advantages in terms of easy-care, fast-drying properties, high durability, excellent physical properties, abrasion resistance, balanced moisture absorption, good elasticity, lightness, comfort and softness. Polyamide, also known as nylon, is a linear condensation polymer composed of repeated primary bonds of amide group. A polyamide fiber is generally produced by melt-spinning extrusion and is available in staple fiber, tow, monofilament, multi-filament, flat or texturized form. Polyamides are semi-crystalline polymers. The amide group -(-CO-NH-)- provides hydrogen bonding between polyamide intermolecular chains, providing high strength at elevated temperatures, toughness at low temperatures, wear and abrasion resistance, low friction coefficient and good chemical resistance. These properties have made polyamides among the strongest of all available man-made fibers. However, fossil-based polyamides, as well as biobased polyamides, usually take decades to fully biodegrade upon disposal.

According to the Environmental Protection Agency (EPA), traditional polymers biodegrade in landfill and compost environments within 30 to 50 years.

EP 2 842 406 A1 discloses an alternative to modify polyamide fibers by introducing amino acids such as glycine during the polymerization. The drawback of this approach is that it leads to mechanical degradation due to changes in the polymer during polymerization, such as significant reduction of the molecular weight, viscosity, tensile strength and elongation. EP 2 842 406 A1 also shows the reduced performance and durability of the product (trimmer line) when exposed to outdoor conditions.

Another approach reported to increase the biodegradation of polyamide by blending it with polyvinyl alcohol (PVA) or PLA, as shown in CN 1490443 A. But high amounts of PLA (e.g. > 50%wt) are required. In addition, a compatibilizing agent is normally needed to blend polyamide and PLA by extrusion.

Therefore, the current approaches tend to alter the mechanical and chemical properties, thereby modifying the dyeing characteristics of the textile article. They also exhibit biodegradation in outdoor conditions (e.g. photo-degradation) and require much higher amounts of additive. Thus, they are not successfully applied into textile articles.

In view of the above, there is a need for a biodegradable polyamide fiber with superior properties for textile applications.

Therefore, one of the objectives of the present invention is to provide a polyamide fiber and article made therefrom with increased rate of biodegradation. The polyamide fiber should retain the original polyamide characteristics such as viscosity (IVN), amino terminal groups (ATG), carboxylic terminal groups (CTG) and mechanical properties, thus preserving the polyamide properties required for textile applications.

In other words, the present invention aims to find a solution for obtaining a biodegradable polyamide fiber for textile article applications. Such polyamide fiber should retain the chemical and mechanical properties required for the life-time of the textile article and should therefore exhibit biodegradability only when in contact with disposal environment.

The present invention also aims to provide a method for obtaining such biodegradable polyamide fiber, and clearly demonstrates the rate of biodegradability by standard test methodologies, specific time-frames and disposal pathways. Advantageously, the invention should propose both a biobased and a biodegradable polyamide fiber with good mechanical properties and shelf-life.

BRIEF DESCRIPTION OF THE INVENTION

The present invention thus provides a biodegradable polyamide fiber comprising:

- A polyamide having a hygroscopicity delta, which is the difference between the moisture absorption rate of the polyamide after 24h at 30°C and 90% Relative Humidity (RH) and the moisture absorption rate of the polyamide after 24h at 20°C and 65% Relative Humidity (RH), of at least 4%, wherein the polyamide is a polyamide 5.X, X being an integer from 4 to 6 provided that those polyamides are modified when necessary to reach a hygroscopicity delta of at least 4%; or a chemically modified polyamide by addition of hydrophilic modifiers; or by copolymerizing said polyamide with oxyethylene groups or polyetheramine groups;
- A biodegradation agent wherein the biodegradation agent comprises at least one of the following components:

    a. Chemo attractant or chemo taxis compound, being a sugar, a coumarin, a furanone or mixtures thereof,
    b. Glutaric acid or its derivative,
    c. Carboxylic acid compound, being hexadecanoic acid
    d. Biodegradable polymer, being chosen from polylactic acid, poly(lactic-co-glycolic acid), polypropylene carbonate, polycaprolactone, polyhydroxyalkanoate, chitosan, gluten, one or more aliphatic/aromatic polyesters such as polybutylene succinate, polybutylene succinate-adipate, polybutylene succinate-sebacate, or polybutylene terephthalate-coadipate, and mixtures thereof.
    e. Swelling agent, selected in the group consisting of natural fiber, cultured colloid, cyclo-dextrin, polylactic acid and mixtures thereof.

Indeed, it has been surprisingly found that the use of a specific polyamide characterized by the fact that it has a minimum hygroscopicity delta of 4%, in combination with a biodegradation agent considerably accelerates the biodegradation of a polyamide article to such an extent as to significantly reduce their environmental impact without adversely affecting their desirable textile properties and shelf-life. An important attribute of the invention is the fact that the resulting polyamide fiber exhibits the same desired mechanical properties, and have effectively similar shelf-lives as products without the biodegradable agent, and yet, when disposed of, are able to at least partially metabolize into inert biomass by the communities of anaerobic and aerobic microorganisms commonly found almost everywhere on Earth.

The present invention also aims at a method for obtaining said biodegradable polyamide fiber, wherein the biodegradable agent is introduced to the polyamide fiber during melt-spinning extrusion.

Also, the present invention proposes a polyamide article comprising the biodegradable polyamide fiber as defined above and below in the following paragraphs;

Then, another object of the present invention is the use in a polyamide fiber of a polyamide having a hygroscopicity delta of at least 4%, which is the difference between the moisture absorption rate of the polyamide after 24h at 30°C and 90% Relative Humidity (RH) and the moisture absorption rate of the polyamide after 24h at 20°C and 65% Relative Humidity (RH), in combination with a biodegradation agent in order to enhance the biodegradability properties of the polyamide fiber made therefrom, wherein the polyamide is a polyamide 5.X, X being an integer from 4 to 6 provided that those polyamides are modified when necessary to reach a hygroscopicity delta of at least 4%; or a chemically modified polyamide by addition of hydrophilic modifiers; or by copolymerizing said polyamide with oxyethylene groups or polyetheramine groups; and wherein the biodegradation agent comprises at least one of the following components:

    a. Chemo attractant or chemo taxis compound, being a sugar, a coumarin, a furanone or mixtures thereof,

b. Glutaric acid or its derivative,

c. Carboxylic acid compound, being hexadecanoic acid,

d. Biodegradable polymer, being chosen from polylactic acid, poly(lactic-co-glycolic acid), polypropylene carbonate, polycaprolactone, polyhydroxyalkanoate, chitosan, gluten, one or more aliphatic/aromatic polyesters such as polybutylene succinate, polybutylene succinate-adipate, polybutylene succinate-sebacate, or polybutylene terephthalate-coadipate, and mixtures thereof,

e. Swelling agent, selected in the group consisting of natural fiber, cultured colloid cyclo-dextrin, polylactic acid and mixtures thereof.

DETAILED DESCRIPTION OF THE INVENTION

Definitions

The expression "polyamide fiber" in the sense of the present invention is the generic term including the following spun articles: a fiber, a monofilament, a multifilament and a yarn. A "polyamide article" according to the invention is a transformed or treated polyamide fiber and includes staple fibers, any flock or any textile composition made of polyamide fiber, especially fabrics and/or garments. In the below description, the terms "fiber", "yarn" and "filament" can be used indifferently without changing the meaning of the invention.

The term "biodegradation rate" refers to the time for a polyamide article to biodegrade to a specific degree. For instance, a biodegradation rate of 5% in 30 days means that the biogases emitted ($CO_2 + CH_4$) represent 5% by weight of the original carbon content of the sample. Biodegradation rate is measured according to ASTM D5511 testing standard.

The term "hygroscopicity delta" is the difference between the moisture absorption rate of the polyamide after 24h at 30°C and 90% Relative Humidity (RH) and the moisture absorption rate of the polyamide after 24h at 20°C and 65% Relative Humidity (RH). The moisture absorption rate of the polyamide is calibrated by drying the polyamide for 2 hours at 105°C before placing it into the two above temperature and humidity conditions.

For instance, the following test is adequate to measure the hygroscopicity delta:

About 2 grams of polyamide is placed in a weighing bottle and dried for 2 h at 105 ° C. The weighing bottle is then weighted (weight W3). The weighing bottle is then placed into a climatic chamber for 24 h at 20°C and 65% RH. The weight of the sample is measured again (weight W1). The weighing bottle is then placed into a climatic chamber for 24 h at 30 °C and 90% RH. The weight of the sample is measured again (weight W2).

The hygroscopicity delta is measured by the following equation:

$$MR1 = (W1 - W3) / W3,$$

$$MR2 = (W2 - W3) / W3.$$

The Moisture absorption rate difference (Hygroscopicity delta = A MR) is obtained by

$$\Lambda\, MR = MR2 - MR1.$$

The term "biodegradation agent" is understood to mean a concentrate of biodegradable-converting additives, which are normally used in the form of liquid, solid or powder masterbatch. The term "masterbatch" refers to a concentrate of additive within a polymer matrix, most commonly in the form of pellets. The masterbatch is used to introduce additives into polymers during processing so as to obtain higher dispersion and homogeneity.

Biodegradable polyamide fiber

Polyamide having a hygroscopicity delta of at least 4% The polyamide is an aliphatic polyamide selected in the group consisting of: polyamide 5.X, X being an integer from 4 to 6.

The above polyamides are well known in the art and are commercially available.

Polyamide 5.X is made of pentamethylenediamine and an aliphatic dicarboxylic acid(s) as raw materials. The list of potential dicarboxylic acids is the following: butanedioic acid (succinic acid), pentanedioic acid (glutaric acid), hexanedioic acid (adipic acid), All those diacids are commercially available.

Polyamides 5.X have the advantage of being able to be manufactured from biomass according to ASTM6866. As pentamethylenediamine can also be prepared from bio-resources according to ASTM6866, the resulting polyamide can be at least 40% bio-sourced and up to 100% from bio-resources.

When needed to achieve the hygroscopicity delta of at least 4%, the polyamide can be chemically modified. When chemically modified, it can be by addition of hydrophilic modifiers such as water soluble polymers like polyvinylpyrrolidone, sulfonate polar groups such as organic sulfonic acid; by copolymerizing said polyamide with oxyethylene groups or polyetheramine groups; by increasing the proportion of amorphous regions. Advantageously, the polyamide can be modified by addition of hydrophilic modifiers such as water soluble polymers like polyvinylpyrrolidone, sulfonate polar groups such as organic sulfonic acid; or by copolymerizing said polyamide with oxyethylene groups or polyetheramine groups.

Examples of polyamides that require such a modification are polyamide 4, polyamide 4.6, polyamide 4.10; polyamide 5.10; polyamide 6, polyamide 6.6, polyamide 6.9, polyamide 6.10; polyamide 6.12; polyamide 10.10; polyamide 10.12; polyamide 11; polyamide 12; polyamide 12.12; and mixtures thereof.

A particularly preferred polyamide is polyamide 5.6. Indeed, first polyamide 5.6 does not need to be modified to reach the minimum hygroscopicity delta of 4%, then this polyamide shows positive synergy with the biodegradation agent when compared to conventional polyamide 6.6. In addition, this polyamide is biobased according to measured according to ASTM D6866 testing standard.

Polyamide 5.6 (Nylon 5.6) or poly(pentamethylene adipamide) is prepared from pentamethylenediamine and adipic acid as raw materials.

The amino terminal groups (ATG) content of the polyamides used in the present invention is advantageously from 25 to 60 equivalents/ton, and the carboxyl terminal groups (CTG) is advantageously from 45 to 90 equivalents/ton. Those amino/carboxyl end groups contents are measured according to the methodology explained hereinafter in the experimental part.

The preferred polyamide 5.6 may have a viscosity index (IVN) in the range of 100 to 200 ml/g, preferably between about 120 and 170. This IVN is measured according to the standard ISO 307, which is explained hereinafter in the experimental part.

A particularly preferred polyamide 5.6 according to the present invention has a IVN (viscosity index) of from 138 to 142, and ATG (amine terminal groups) from 38 to 42.

The hygroscopicity delta of the polyamide according to the invention is minimum 4%, advantageously varying from 4 to 10% and more preferably from 5 to 8%.

Biodegradation agent

Biodegradable-converting additives are normally used to increase the biodegradation rate of polymers that have a very slow rate of biodegradation. Several approaches have been used recently, such as using oxo-biodegradable additives, biodegradable polymers and prodegradants.

Oxo-biodegradation additives claim to degrade by a combination of oxidation and biodegradation. The incorporation of oxygen in the carbon chain polymer backbone results in the formation of functional groups such as carboxylic or hydro-carboxylic acids, esters as well as aldehydes and alcohols, which increase the hydrophilicity of the polymer. The oxidation is accelerated by photo-degradation and thermal-degradation. The photo-degradation is obtained by UV absorption and formation of free radicals.

Prodegradants are additives capable of accelerating the reaction of the polymer with atmospheric oxygen and incorporating oxygen atoms into polymer chains. The most reported prodegradant additives are the transition metal salts such as iron, cobalt and manganese. They are able to catalyze the decomposition of hydroperoxides into free radicals. Other prodegradant additives include transition metal salts of fatty acid esters, amides and dithiocarbamates (e.g. manganese stearate, cobalt acetate, cobalt stearate, cupric oleate and ferric acetate); ferrocene; metal oxides such as $TiO_2$ and ZnO; unsaturated alcohols or esters; benzophenones; $\gamma$- pyrones; $\beta$-diketones; polyisobutylene; selected amines (e.g. hexamine, amine guanidine); peroxides and hydroperoxides. The above mentioned additives are not suitable for textile applications due to the oxygen- , photo- and thermal-degradation, what leads to reduction of the properties during the service life of the textiles. In addition, they are not environmentally friendly and provide ecotoxicological problems to the soil.

Biodegradable polymers, on the other hand, are used to render polymer biodegradable by rapidly biodegrading and hence leaving behind a porous and sponge like structure with a high interfacial area and low structural strength. The polymer matrix then begins to be degraded by an enzymatic attack, causing scission of the polymer into smaller molecules that are more easily digested by microorganisms. The most common approaches are using starch-based polymers, polylactic acid (PLA), poly(lactic-co-glycolic acid) (PLGA), polypropylene carbonate (PPC), polycaprolactone (PCL), polyhydroxyalkanoate (PHA), chitosan, gluten, co-polyesters or aliphatic-aromatic polyesters such as polybutylene succinate (PBS), polybutylene adipate (PBA), polybutylene succinate-adipate, polybutylene succinate-sebacate, or polybutylene terephthalate-coadipate. Unfortunately, higher amounts are required to render the polymer biodegradable, compatibilizing and plasticizing additives are also needed.

In the present invention, the biodegradation agent is preferably based on "chemo attractant" additives. These additives attract the microorganisms by providing food to them. Additional additives can also be included such as swelling agents, carboxylic acid, and so on.

Exemplary non-limiting biodegradation agents suitable for use as biodegradation agents in the composition, methods and uses of the present invention are fully disclosed in US patent published application 2008/0103232 to Lake et al. Some extracts and content of this patent can clearly represent the biodegradation agent used in the present invention.

The biobased polyamide of the present invention provides for increased susceptibility to biodegradation by incorporating a biodegradation agent into the polyamide fiber. The biodegradation agent is advantageously a masterbatch comprising additives including but not limited to:

1. Chemo attractant or chemo taxis compound, being a sugar, a coumarin, a furanone or mixture thereof,
2. Glutaric acid or its derivative
3. Carboxylic acid compound, being hexadecanoic acid
4. Biodegradable polymer, being chosen from polylactic acid, poly(lactic-co-glycolic acid), polypropylene carbonate, polycaprolactone, polyhydroxyalkanoate, chitosan, gluten, one or more aliphatic/aromatic polyesters such as polybutylene succinate, polybutylene succinate-adipate, polybutylene succinate-sebacate, or polybutylene terephthalate-coadipate, and mixtures thereof.
5. Swelling agent, selected in the group consisting of natural fiber, cultured colloid, cyclo-dextrin, polylactic acid and mixtures thereof.

In one embodiment, the biodegradation agent comprises a chemo attractant or chemo taxis agent to attract microbes consisting of sugars that are not metabolized by bacteria, coumarin or furanone. Examples of furanones include 3,5 dimethylyentenyl dihydro 2(3H)furanone isomer mixtures, emoxyfurane and N- acylhomoserine lactones, or a combination thereof. Examples of sugars include galactose, galactonate, glucose, succinate, malate, aspartate, serine, fumarate, ribose, pyruvate, oxalacetate and other L-sugar structures and D-sugar structures but not limited thereto. In a preferred embodiment, positive chemo taxis such as a scented polyethylene terephthalate pellet, starch D-sugars not metabolized by the microbes or furanone that attracts microbes or any combination thereof are used. In one aspect, the furanone compound is in a range equal to or greater than 0-20% by weight. In another aspect, the furanone compound is 20-40% by weight, or 40-60% by weight, or 60-80% by weight or 80-100% by weight of the total additive.

In another embodiment, the biodegradation agent comprises a glutaric acid or its derivative. In one aspect, the glutaric acid compound can be propylglutaric acid for example, but is not limited thereto. The glutaric acid is in the range equal to or greater than 0-20% by weight of the total additive. In another aspect, the glutaric acid is 20-40% by weight, or 40-60% by weight, or 60-80% by weight or 80-100% by weight, 20- 40%, 40-60%, 60-80% or 80-100% by weight of the total additive.

In yet another embodiment, the carboxylic acid compound is hexadecanoic acid compound and is in the range equal to or greater than 0-20% by weight of the total additive. In another aspect, the hexadecanoic acid is 20-40% by weight, or 40-60% by weight, or 60-80% by weight or 80-100% by weight, 20-40%, 40-60%, 60-80% or 80-100% by weight of the total additive.

In yet another embodiment, the biodegradation agent comprises a biodegradable polymer that belongs to the group of polylactic acid, poly(lactic-co-glycolic acid), polypropylene carbonate, polycaprolactone, polyhydroxyalkanoate, chitosan, gluten, and one or more aliphatic/aromatic polyesters such as polybutylene succinate, polybutylene succinate-adipate, polybutylene succinate-sebacate, or polybutylene terephthalate-coadipate, or a mixture thereof. In a preferred embodiment, the biodegradation polymer is polycaprolactone polymer. The polycaprolactone polymer can be selected from, but is not limited to the group of: poly-e-caprolactone, polycaprolactone, poly(lactic acid), poly(glycolic acid), poly (lactic-co-glycolic acid). The polycaprolactone polymer is in the range equal to or greater than 0-20% by weight of the total additive. In another aspect, the polycaprolactone is 20-40% by weight, or 40-60% by weight, or 60-80% by weight or 80-100% by weight, 20-40%, 40-60%, 60- 80% or 80-100% by weight of the total biodegradation agent.

In yet another embodiment, the swelling agent is composed of organoleptic swelling agent such as natural fiber, cultured colloid, cyclo-dextrin, Polylactic acid, etc. The natural or manmade organoleptic swelling agent is in the range equal to or greater than 0-20% by weight of the additive. In one aspect, the organoleptic swelling agent is 20-40% by weight, or 40-60% by weight, or 60- 80% by weight or 80-100% by weight of the total biodegradation agent.

In a preferred embodiment, the biodegradation agent can comprise a mixture of a furanone compound, a glutaric acid, a hexadecanoic acid compound, a polycaprolactone polymer and organoleptic swelling agent (natural fiber, cultured colloid, cyclo-dextrin, polylactic acid, etc.)

The biodegradation agents are known to those skilled in the art and are commercially available as solid, liquid or powder masterbatches such as "Eco-One®" from EcoLogic® LLC; "SR5300" from ENSO Plastics; "EcoPure" from Bio-Tec Environmental; "ECM masterbatch pellets" from ECM biofilms; "BioSphere" from BiosPhere Plastic; "Enso Restore" from ENSO Plastics; "MECO1" from Hybrid Green.

A biobased polyamide fiber according to the invention has higher rate of biodegradation when the biodegradation agent is present in an amount of about 1.0% to 5.0%, preferably about 2.0 to 3.0% by weight of the total weight of the polyamide fiber. The best mode is when the biodegradation agent, in particular the commercial "Eco-One®" masterbatch is present in an amount of 1.5% to 2.5% by weight of the total weight of the polyamide fiber.

It is believed that the biodegradation agent enhances the biodegradability of otherwise non-biodegradable polyamide articles through a series of chemical and biological processes when disposed of in a microbe-rich environment, such as a biologically active landfill or anaerobic digesters. The biodegradation process begins with swelling agents that, when combined with heat and moisture, expands the polyamide molecular structure. The biodegradation agent causes the polyamide to be an attractive food source to certain soil microbes, encouraging the polyamide to be consumed more quickly than polyamides without the biodegradation agent. The combination of the bio-active compounds mentioned hereinbefore attracts a colony of microorganisms that break down the chemical bonds and metabolize the polyamide through natural microbial processes.

The biodegradation agent requires the action of certain enzymes for the biodegradation process to begin, so polyamide articles containing the biodegradation agent will not start to biodegrade during the intended use of the article described herein. Indeed, the introduction of a biodegradable agent into the biobased polyamide fiber leads to a higher rate of biodegradation while maintaining the required mechanical and chemical properties of the fiber for textile applications and during the life-time of the textile article. The biodegradation process takes place aerobically or anaerobically in well-known waste management pathways.

The fiber

The biodegradable polyamide fiber according to the invention has advantageously an overall dtex of about 40 to 300, and a dpf (dtex per filament) of about 1 to 5. The tenacity (at break) is from 30 to 80 cN/dtex. The elongation (at break) is from 20% to 90%.

Process for obtaining a biodegradable polyamide fiber

The invention also provides a method for obtaining the biodegradable polyamide fiber as described above. The method involves introducing at least a biodegradation agent into the polyamide fiber by melt-spinning extrusion.

According to the invention the expression "melt-spinning" is understood to mean the extrusion process of converting the polyamide in a melt form into polyamide fibers. The polyamide(s) may be fed to the melt-spinning device in pellet, powder or melt form. The method includes any conventional extrusion spinning means suitable for melt-spinning extrusion of polyamide, these means being well known by a person skilled in the art, such as single-screw extruder, double-screw extruder, bicomponent extruder and grid spinning head. The melt-spinning extrusion is further defined as being LOY (low-oriented yarn), POY (partially oriented yarn), FDY (fully drawn yarn), FOY (fully oriented yarn), LDI (Low denier Industrial) or HDI (High denier Industrial).

According to the preferred embodiment, the melt spinning extrusion comprises the following steps:

a1. Feeding the polyamide as a melt, pellet or powder into the inlet of a screw extruder
a2. Melting, homogenizing and pressurizing the polyamide,
a3. Spinning the molten polyamide into a fiber,
a4. Cooling down the fiber and winding.

wherein the biodegradation agent is continuously introduced during step a1 as a pellet, powder or liquid form, preferably with the use of a dosing apparatus.

As mentioned above, the biodegradation agent is preferably continuously introduced during step a1 of the single-screw extruder. It can be added as a pellet, powder or liquid form, by means of a dosing apparatus like a dosing pump or a gravimetric feeding apparatus, preferably a gravimetric feeding apparatus. According to this embodiment, the biodegradation agent is melt-mixed with the polyamide, before the formation of the fiber.

In the method according to the invention, the biodegradation agent is advantageously introduced in an amount of 1.0% to 5.0%, preferably 1.5 to 2.5% by weight of the total weight of the polyamide fiber. In a particularly preferred embodiment of the present invention, the biodegradation agent is continuously introduced as a pellet by means of a gravimetric feeding apparatus and the quantity added is 2% by weight of the total weight of the polyamide fiber.

In step a2, the polyamide is melted, homogenized and pressurized inside the screw extruder, preferably at a temperature from 260 to 310°C, which is above the melting temperature of the polyamide, and at an extrusion pressure from 30 to 70 bar.

Then, according to step a3, the molten polyamide is spun into fibers (or yarns or filaments) preferably at a temperature from 260 to 310°C, spinning pack pressure from 150 to 250 Bar and a spinning pack flow rate from 3 to 8 kg/h, with the use of a spinning screen-pack containing filtering elements and a spinneret.

Step a4 is the step of cooling down the fibers (or yarns or filaments) until the solidified form and winding the polyamide fibers into bobbins. A spinning oil can also be added onto the fiber at this step.

In the present invention, the extruder can be equipped with a metering system for introducing polymers and optionally additives such as masterbatches into the main polymer, at step a1 and/or a2 and/or a3.

Additional additives can be introduced during the method of the invention or may be present in the polyamide and/or the biodegradation agent. The additives are selected from: plasticizers, antioxidants, stabilizers such as heat or light stabilizers, colorants, pigments, nucleating agents such as talc, matifying agents such as titanium dioxide or zinc sulphide, processing aids, biocides, viscosity modifiers, catalysts, Far Infrared Rays emitting minerals, anti-static additives, functional additives, optical brightening agents, nanocapsules, anti-bacterial, anti-mite, anti-fungi or other conventional additives. These additives are generally added in the polymer or at step a1 and/or a4 of the melt-spinning extrusion, in an amount of 0,001% to 10% by weight of the polyamide article.

Polyamide article

The polyamide fiber according to the invention can then be transformed into a polyamide article, notably a textile fabric and/or garment. A polyamide article according to the invention is preferably a fiber, a staple fiber, a flock, a woven, a knitted or non-woven fabric or a textile article made from the polyamide fiber of the invention (defined above) or obtained from the process according to the invention. The textile article may be any textile article known in the art including, but not limited to woven fabric, knitted fabric, nonwoven fabric, ropes, cords, sewing thread, and so forth.

The advantages of the biodegradable polyamide fibers and articles made therefrom according to the invention are summarized below:

- The biodegradation rate is substantially greater than that of an identical reference material in the absence of the biodegradation agent, in particular for PA5.6.
- For PA5.X, the biodegradation rate as measured according to ASTM D5511 testing standard that is substantially greater than that of a fossil-based polyamide fiber in the presence of the biodegradation agent.
- the mechanical and chemical properties of the polyamide fiber are unchanged during the life-time of the textile article.
- The polyamide articles exhibit higher rate of biodegradation when compared to conventional polyamide articles, leading to shorter life-cycle and reduced disposal problems.
- The polyamide articles can be obtained from renewable feedstock, thereby contributing to sustainable development and low environmental impact.
- The approach requires very low amount of biodegradation agent, at low-cost and applicable to any conventional and well-kwon extrusion machinery.
- The degradation is only activated in microbiological-rich environments such as landfill, digester or composting.

Other details or advantages of the invention will become more clearly apparent in the light of the examples given below.

BRIEF DESCRIPTION OF THE FIGURE

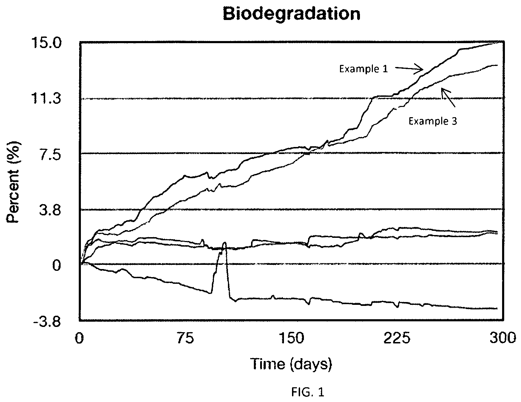

FIG. 1 is the graphic of biodegradability according to ASTM D5511 for table 1 of the examples below.

EXAMPLES

A series of polyamide articles (Examples 1 to 4), including comparative polyamide articles (Example 3 and 4) and a control (example 2) are formed and evaluated for mechanical properties, photo-oxidation, biodegradation, renewable carbon content, IVN (viscosity index), ATG (terminal amino groups) and CTG (carboxylic terminal groups).

Amino terminal group content (ATG)

The amino end group (ATG) content was determined by a potentiometric titration method. The quantity of 2 grams of polyamide is added to about 70 ml of phenol 90%wt. The mixture is kept under agitation and temperature of 40°C until complete dissolution of the polyamide. The solution is then titrated by 0.1N HCl at about 25°C. The result is reported as equivalent/ton (eq/ton). In the case of analyzing fibers and articles, any residue or spin-finish must be previously removed.

Solution viscosity (IVN)

The determination of the solution viscosity (IVN) is performed according to ISO 307. The polyamide is dissolved in formic acid 90%wt at 25°C at a concentration of 0.005g/ml, and its flow time is measured. The result is reported as ml/g.

Carboxylic terminal group content (CTG)

The carboxylic terminal group (CTG) content was determined by a titration method. The quantity of 4 grams of polyamide is added to about 80 ml of benzyl alcohol. The mixture is kept under agitation and temperature of 200°C until complete dissolution of the polyamide. The solution is then titrated by 0.1N of potassium hydroxide in ethylene glycol. The result is reported as equivalent/ton (eq/ton). In the case of analyzing fibers and articles, any residue or spin-finish must be previously removed.

ASTM D5511- Biodegradation in anaerobic digester

ASTM D5511/ ISO 15985: A small amount of test item is added to a large amount of highly active inoculum that has been stabilized prior to the start of the biodegradation test. The inoculum consists of residue obtained directly from a high solids biogasification unit or obtained after the dewatering of anaerobic sludge. Optimal conditions are provided and the mixture is left to ferment batch wise. The volume of biogas produced is measured and used to calculate the percentage of biodegradation based on carbon conversion.

ASTM D6866- Renewable biobased content

Biobased or renewable content of a product is the amount of biobased carbon in the material as fraction weight (mass) or percent weight (mass) of the total organic carbon in the material or product. The application of ASTM D6866 to derive "biobased content" is built on the same concepts as radiocarbon dating. It is done by deriving a ratio of the amount of radiocarbon (14C) in an unknown sample to that of a modern reference standard. The ratio is reported as a percentage with the units "pMC" (percent modern carbon). If the material being analyzed is a mixture of present day radiocarbon and fossil carbon (i.e., containing no radiocarbon), then the pMC value obtained correlates directly to the amount of biomass material present in the sample.

Photo-oxidation ISO 105 B06

This method measures the effect of artificial light in the textile properties, and is intended to mimic day/night conditions of aging. The article is exposed to an artificial light (e.g. a xenon arc fading lamp) during a specified period of time (e.g. 72 hrs.) and conditions (45°C, 60% relative humidity). In the present study, the mechanical properties were evaluated before and after exposure.

Hygroscopicity

About 2 grams of sample is placed in a weighing bottle and dried for 2 h at 105°C (weight W3). The weighing bottle is then placed into a climatic chamber for 24 h at 20°C and 65% RH. The weight of the samples is measured again (weight W1). The weighing bottle is then placed into a climatic chamber for 24 h at 30°C and 90% RH. The weight of the sample is measured again (weight W2). The hygroscopicity delta is measured by the following equation: MR1 = (W1 - W3) / W3, MR2 = (W2 - W3) / W3. The Moisture absorption rate difference is obtained by A MR (%) = MR2 - MR1.

Example of the invention- Example 1- Polyamide 5.6 with 2% biodegradation agent

A biobased polyamide fiber was produced by melt-spinning extrusion from polyamide 5.6 pellets and a biodegradable agent.
The polyamide 5.6 pellet is a commercially available polyamide from Cathay Biotech under the trademark Terryl®. The IVN is from 138 to 142, ATG from 38 to 42, and CTG from 65 to 75 measured according to the methodology disclosed herein.
The biodegradable agent is a commercially available masterbatch from EcoLogic® LLC, under the trademark Eco-One®.
The biodegradable agent was continuously introduced during step a1 of the single-screw extruder as a masterbatch pellet using a gravimetric feeding apparatus. In step a2, the polyamide blend was melted, homogenized and pressurized inside the screw extruder at a temperature of around 290°C and at an extrusion pressure of around 50 bar.

Then, according to step a3, the molten polyamide blend was spun into multi-filament yarn at a spinning pack pressure of around 200 bar and at a spinning pack flow rate of around 5 kg/h. At Step a4, the polyamide fiber blend was solidified and wound into bobbins at 4200 m/min. The biodegradable agent was continuously added at step a1 as 2% weight of the total polyamide blend. The multi-filament polyamide blends obtained were further texturized into linear density of 1x80f68 dtex and knitted into fabric.

Control Example 2 - Polyamide 5.6 without biodegradation agent

A biobased polyamide fiber was produced by melt-spinning extrusion from polyamide 5.6 pellets, similarly to the conditions described in example 1, however, without the biodegradation agent.

Comparative Example 3 - Polyamide 6.6 with 2% biodegradation agent

A fuel-based polyamide fiber was produced by melt-spinning extrusion from polyamide 6.6 pellets and with the same process and biodegradable agent as described in example 1. The polyamide 6.6 pellet was produced at Rhodia Poliamida e Especialidades Ltda. It is produced from the polymerization of a nylon salt containing mainly hexamethylenediamine and adipic acid. The IVN (viscosity index) is from 128 to 132, and ATG (amine terminal groups) from 40 to 45, measured according to the methodology disclosed herein.

Comparative Example 4 - Polyamide 6.6 without biodegradable agent

A fuel-based polyamide fiber was produced by melt-spinning extrusion from polyamide 6.6 pellets, similarly to the conditions described in example 3, however, without the biodegradable agent.

Study of the biodegradability ASTM D5511

TABLE 1- Results after 300 days

| | Inoculum | Negative | Positive | Example 4 | Example 3 | Example 2 | Example 1 |
|---|---|---|---|---|---|---|---|
| | | | | PA 5.6 No agent | PA 6.6 Agent 2% | PA 5.6 No agent | PA 5.6 Agent 2% |
| Cumulative gas volume (mL) | 785.1 | 285.4 | 9695.8 | 1639.6 | 5293.6 | 1584.1 | 5649.9 |
| Percent CH4 (%) | 48.2 | 33.2 | 43.3 | 37.7 | 48.2 | 42.6 | 49.3 |
| Volume CH4 (mL) | 378.7 | 94.7 | 4195.7 | 618.8 | 2553.1 | 674.2 | 2786.7 |
| Mass CH4 (g) | 0.27 | 0.07 | 3.00 | 0.44 | 1.82 | 0.48 | 1.99 |
| Percent CO2 | 38.0 | 39.6 | 42.0 | 39.0 | 35.5 | 39.1 | 36.6 |
| Volume CO2 (mL) | 298.5 | 112.9 | 4072.7 | 640.1 | 1879.1 | 619.8 | 2065.9 |
| Mass CO2 (g) | 0.59 | 0.22 | 8.00 | 1.26 | 3.69 | 1.22 | 4.06 |
| Biodegraded Mass (g) | 0.36 | 0.11 | 4.43 | 0.67 | 2.37 | 0.69 | 2.60 |
| **Percent Biodegraded (%)** | -3.0 | -3.0 | 100.0 | **2.2** | **13.9** | **2.3** | **15.5** |

Fig 1 shows the graph.

Study of the biobased content ASTM D6866

TABLE 2- Biobased results

| ASTM 6866 | PA 5.6 Example 1 | PA 6.6 Example 3 |
|---|---|---|
| % Biobased | 44% | 0% |

Study of the mechanical properties before and after photo-oxidation - ISO 105 B06

TABLE 3- Mechanical

| Mechanical properties Photo-degradation | Polyamide 5.6 | | | | Polyamide 6.6 | | | |
|---|---|---|---|---|---|---|---|---|
| | Agent 2% (example 1) | | No agent (example 2) | | Agent 2% (example 3) | | No agent (example 4) | |
| | Before | After | Before | After | Before | After | Before | After |
| Linear density (dtex) | 101±2.5 | 101±2.5 | 101±2.5 | 101±2.5 | 101±2.5 | 101±2.5 | 101±2.5 | 101±2.5 |
| Tenacity (cN/Tex) | 32.1±0.5 | 29.8±1.0 | 30.5±0.9 | 30.9±0.7 | 32.5±1.3 | 32.7±0.2 | 32.3±1.4 | 31.3±0.8 |
| Elongation (%) | 74.9±1.5 | 68.7±3.5 | 78.0±2.9 | 78.5±2.5 | 71.9±2.7 | 71.9±1.4 | 72.7±2.6 | 72.5±1.8 |

Study of the yarn properties with and without the biodegradation agent

TABLE 4- Yarn properties

| Polymer properties | Polyamide 5.6 | | Polyamide 6.6 | |
|---|---|---|---|---|
| | Agent 2% | No agent | Agent 2% | No agent |
| | Example 1 | Example 2 | Example 3 | Example 4 |
| IVN | 119 | 120 | 129 | 129 |
| CTG | 77.4 | 78.4 | 91.3 | 90.7 |
| ATG | 38.4 | 36.5 | 30.5 | 32.2 |

Study of the hygroscopicity of polyamides

TABLE 5- Hygroscopicity

| | 20°C 65% RH | 30°C 90% RH | Hygroscopicity [delta] |
|---|---|---|---|
| PA 5.6 | 5.0% | 10.1% | 5.1% |
| PA 6.6 | 3.8 % | 6.9 % | 3.1 % |

CONCLUSION

The biodegradability analysis of ASTM D5511 (Table 1) shows that the biodegradation agent enhances the biodegradability of the biobased polyamide 5.6 by at least 15.5% within 300 days, and it can be projected to be 90% within 5 years or less, if considering the same increasing rate. The enhanced biodegradability is sufficient to significantly reduce the environmental impact without affecting the polyamide original properties. The biodegradation time is thus surprisingly reduced from >50 years (expected biodegradation time for pristine polyamide) to as low as 5 years or less.
Polyamide 5.6 revealed a positive synergy with the biodegradation agent, with higher biodegradable rate (11.5% higher) than conventional polyamide 6.6 in the presence of the agent.

Regarding the biobased carbon content, the example of the invention (example 1) clearly confirms that the renewable carbon is indeed more than 40% (Table 2), and the comparable sample of polyamide 66 is zero, which means that the carbon of the polyamide 5.6 is biobased instead of the fossil-fuel based of PA 6.6.

Table 3 and 4 do not show significant reduction of chemical and mechanical properties. The polymer characteristics such as viscosity and terminal groups are maintained the same, which means that the dyeability, tenacity and elongation are not significantly affected.

## Claims

1. A biodegradable polyamide fiber comprising:

   • A polyamide having a hygroscopicity delta, which is the difference between the moisture absorption rate of the polyamide after 24h at 30°C and 90% Relative Humidity (RH) and the moisture absorption rate of the polyamide after 24h at 20°C and 65% Relative Humidity (RH), of at least 4%, wherein the polyamide is a polyamide 5.X, X being an integer from 4 to 6 provided that those polyamides are modified when necessary to reach a hygroscopicity delta of at least 4%; or a chemically modified polyamide by addition of hydrophilic modifiers; or by a copolymerizing said polyamide with oxyethylene groups or polyetheramine groups;
   • A biodegradation agent, wherein the biodegradation agent comprises at least one of the following components:

   a. Chemo attractant or chemo taxis compound, being a sugar, a coumarin, a furanone or mixtures thereof,
   b. Glutaric acid or its derivative,
   c. Carboxylic acid compound, being hexadecanoic acid
   d. Biodegradable polymer, being chosen from polylactic acid, poly(lactic-co-glycolic acid), polypropylene carbonate, polycaprolactone, polyhydroxyalkanoate, chitosan, gluten, one or more aliphatic/aromatic polyesters such as polybutylene succinate, polybutylene succinate-adipate, polybutylene succinate-sebacate, or polybutylene terephthalate-coadipate, and mixtures thereof.
   e. Swelling agent, selected in the group consisting of natural fiber, cultured colloid, cyclodextrin, polylactic acid and mixtures thereof.

2. A biodegradable polyamide fiber according to claim 1, wherein the polyamide is selected from the group consisting of polyamide 4, polyamide 4.6, polyamide 4.10; polyamide 5.10; polyamide 6, polyamide 6.6, polyamide 6.9, polyamide 6.10; polyamide 6.12; polyamide 10.10; polyamide 10.12; polyamide 11; polyamide 12; polyamide 12.12; and mixtures thereof, which are modified by addition of hydrophilic modifiers such as water soluble polymers like polyvinylpyrrolidone, sulfonate polar groups such as organic sulfonic acid; or by copolymerizing said polyamide with oxyethylene groups or polyetheramine groups.

3. A biodegradable polyamide fiber according to claim 1, wherein the polyamide is polyamide 5.6.

4. A biodegradable polyamide fiber according to anyone of claims 1 to 3, wherein the biodegradation agent is present in an amount varying from 0.5% to 5.0%, preferably from 1.0 to 3.0% by weight of the total weight of the polyamide fiber.

5. A biodegradable polyamide fiber according to anyone of claims 1 to 4, wherein the biodegradation agent comprises glutaric acid or a derivative thereof, preferably propylglutaric acid.

6. A method for obtaining a biodegradable polyamide fiber as defined in anyone of claims 1 to 5, wherein the polyamide fiber is obtained by melt-spinning extrusion of at least:

   • the polyamide having a hygroscopicity delta of at least 4%,
   • the biodegradation agent.

7. Method according to claim 6, wherein the melt-spinning extrusion comprises the following steps:

   a1. Feeding the polyamide as a melt, pellet or powder into the inlet of a screw extruder,
   a2. Melting, homogenizing and pressurizing the polyamide,
   a3. Spinning the molten polyamide into a fiber,
   a4. Cooling down the fiber and winding,

wherein the biodegradation agent is continuously and homogenously introduced during step a1 as a liquid, pellet or powder form, preferably with the use of a dosing apparatus.

8. A polyamide article comprising a biodegradable polyamide fiber as defined in anyone of claims 1 to 5 or obtained from the process as defined in anyone of claims 6 or 7, wherein the polyamide article is a fiber, a staple fiber, a flock, a woven, a knitted or non-woven fabric or a textile article made.

9. Use in a polyamide fiber of a polyamide having a hygroscopicity delta of at least 4%, which is the difference between the moisture absorption rate of the polyamide after 24h at 30°C and 90% Relative Humidity (RH) and the moisture absorption rate of the polyamide after 24h at 20°C and 65% Relative Humidity (RH), in combination with a biodegradation agent in order to enhance the biodegradability properties of the polyamide fiber made therefrom, wherein the polyamide is a polyamide 5.X, X being an integer from 4 to 6 provided that those polyamides are modified when necessary to reach a hygroscopicity delta of at least 4%; or a chemically modified polyamide by addition of hydrophilic modifiers; or by copolymerizing said polyamide with oxyethylene groups or polyetheramine groups; and wherein the biodegradation agent comprises at least one of the following components:

a. Chemo attractant or chemo taxis compound, being a sugar, a coumarin, a furanone or mixtures thereof,
b. Glutaric acid or its derivative,
c. Carboxylic acid compound, being hexadecanoic acid,
d. Biodegradable polymer, being chosen from polylactic acid, poly(lactic-co-glycolic acid), polypropylene carbonate, polycaprolactone, polyhydroxyalkanoate, chitosan, gluten, one or more aliphatic/aromatic polyesters such as polybutylene succinate, polybutylene succinate-adipate, polybutylene succinate-sebacate, or polybutylene terephthalate-coadipate, and mixtures thereof,
e. Swelling agent, selected in the group consisting of natural fiber, cultured colloid, cyclodextrin, polylactic acid and mixtures thereof.

**Patentansprüche**

1. Biologisch abbaubare Polyamidfaser, umfassend:

• ein Polyamid mit einem Hygroskopie-Delta, das die Differenz zwischen der Feuchtigkeitsabsorptionsrate des Polyamids nach 24 h bei 30 °C und 90 % relativer Feuchtigkeit (RH) und der Feuchtigkeitsabsorptionsrate des Polyamids nach 24 h bei 20 °C und 65 % relativer Feuchtigkeit (RH) ist, von wenigstens 4 %, wobei das Polyamid ein Polyamid 5.X, wobei X eine ganze Zahl von 4 bis 6 ist, mit der Maßgabe, dass diese Polyamide gegebenenfalls zum Erreichen eines Hygroskopie-Deltas von wenigstens 4 % modifiziert sind; oder ein durch Addition von hydrophilen Modifikatoren; oder durch Copolymerisation des Polyamids mit Oxyethylengruppen oder Polyetheramingruppen chemisch modifiziertes Polyamid ist;
• ein Bioabbaumittel, wobei das Bioabbaumittel wenigstens eine der folgenden Komponenten umfasst:

a. chemischen Lockstoff oder Chemotaxisverbindung, der/die ein Zucker, ein Cumarin, ein Furanon oder Gemische davon ist,
b. Glutarsäure oder ihr Derivat,
c. Carbonsäureverbindung, die Hexadecansäure ist,
d. biologisch abbaubares Polymer, das ausgewählt ist aus Polymilchsäure, Poly(milch-co-glycolsäure), Polypropylencarbonat, Polycaprolacton, Polyhydroxyalkanoat, Chitosan, Gluten, einem oder mehreren aliphatischen/aromatischen Polyestern, wie z. B. Polybutylensuccinat, Polybutylensuccinat-adipat, Polybutylensuccinat-sebacat und Polybutylenterephthalatcoadipat und Gemischen davon,
e. Quellmittel, ausgewählt aus der Gruppe bestehend aus natürlicher Faser, kultiviertem Kolloid, Cyclodextrin, Polymilchsäure und Gemischen davon.

2. Biologisch abbaubare Polyamidfaser gemäß Anspruch 1, wobei das Polyamid ausgewählt ist aus der Gruppe bestehend aus Polyamid 4, Polyamid 4.6, Polyamid 4.10; Polyamid 5.10; Polyamid 6, Polyamid 6.6, Polyamid 6.9, Polyamid 6.10; Polyamid 6.12; Polyamid 10.10; Polyamid 10.12; Polyamid 11; Polyamid 12; Polyamid 12.12; und Gemischen davon, die durch Addition von hydrophilen Modifikatoren, wie z. B. wasserlöslichen Polymeren wie Polyvinylpyrrolidon, polaren Sulfonatgruppen, wie z. B. organischer Sulfonsäure; oder durch Copolymerisation des Polyamids mit Oxyethylengruppen oder Polyetheramingruppen modifiziert sind.

3. Biologisch abbaubare Polyamidfaser gemäß Anspruch 1, wobei das Polyamid Polyamid 5.6 ist.

4. Biologisch abbaubare Polyamidfaser gemäß einem der Ansprüche 1 bis 3, wobei das Bioabbaumittel in einer Menge in dem Bereich von 0,5 Gew.-% bis 5,0 Gew.-%, vorzugsweise von 1,0 bis 3,0 Gew.-%, bezogen auf das Gesamtgewicht der Polyamidfaser, vorhanden ist.

5. Biologisch abbaubare Polyamidfaser gemäß einem der Ansprüche 1 bis 4, wobei das Bioabbaumittel Glutarsäure oder ein Derivat davon, vorzugsweise Propylglutarsäure, umfasst.

6. Verfahren zum Erhalten einer biologisch abbaubaren Polyamidfaser gemäß einem der Ansprüche 1 bis 5, wobei die Polyamidfaser durch Schmelzspinnextrusion von wenigstens:

   • dem Polyamid mit einem Hygroskopie-Delta von wenigstens 4 %,
   • dem Bioabbaumittel, erhalten wird.

7. Verfahren gemäß Anspruch 6, wobei die Schmelzspinnextrusion die folgenden Schritte umfasst:

   a1. Zuführen des Polyamids als Schmelze, Pellet oder Pulver in den Einlass eines Schneckenextruders,
   a2. Schmelzen, Homogenisieren und Druckbeaufschlagen des Polyamids,
   a3. Spinnen des geschmolzenen Polyamids zu einer Faser,
   a4. Abkühlen und Aufwickeln der Faser,
   wobei bei Schritt a1 das Bioabbaumittel, vorzugsweise mithilfe einer Dosiervorrichtung, kontinuierlich und homogen in einer flüssigen, Pellet- oder Pulverform eingeführt wird.

8. Polyamidgegenstand, umfassend eine biologisch abbaubare Polyamidfaser gemäß einem der Ansprüche 1 bis 5 oder erhalten durch das Verfahren gemäß einem der Ansprüche 6 oder 7, wobei der Polyamidgegenstand eine Faser, eine Stapelfaser, eine Flocke, ein gewebtes, gestricktes oder Vliesgewebe oder ein Textilerzeugnis ist.

9. Verwendung eines Polyamids mit einem Hygroskopie-Delta von wenigstens 4 %, das die Differenz zwischen der Feuchtigkeitsabsorptionsrate des Polyamids nach 24 h bei 30 °C und 90 % relativer Feuchtigkeit (RH) und der Feuchtigkeitsabsorptionsrate des Polyamids nach 24 h bei 20 °C und 65 % relativer Feuchtigkeit (RH) ist, in einer Polyamidfaser in Kombination mit einem Bioabbaumittel zum Verstärken der Bioabbaubarkeitseigenschaften der daraus hergestellten Polyamidfaser, wobei das Polyamid ein Polyamid 5.X, wobei X eine ganze Zahl von 4 bis 6 ist, mit der Maßgabe, dass diese Polyamide gegebenenfalls zum Erreichen eines Hygroskopie-Deltas von wenigstens 4 % modifiziert sind; oder ein durch Addition von hydrophilen Modifikatoren; oder durch Copolymerisation des Polyamids mit Oxyethylengruppen oder Polyetheramingruppen chemisch modifiziertes Polyamid ist; und wobei das Bioabbaumittel wenigstens eine der folgenden Komponenten umfasst:

   a. chemischen Lockstoff oder Chemotaxisverbindung, der/die ein Zucker, ein Cumarin, ein Furanon oder Gemische davon ist,
   b. Glutarsäure oder ihr Derivat,
   c. Carbonsäureverbindung, die Hexadecansäure ist,
   d. biologisch abbaubares Polymer, das ausgewählt ist aus Polymilchsäure, Poly(milch-co-glycolsäure), Polypropylencarbonat, Polycaprolacton, Polyhydroxyalkanoat, Chitosan, Gluten, einem oder mehreren aliphatischen/aromatischen Polyestern, wie z. B. Polybutylensuccinat, Polybutylensuccinat-adipat, Polybutylensuccinat-sebacat und Polybutylenterephthalatcoadipat und Gemischen davon,
   e. Quellmittel, ausgewählt aus der Gruppe bestehend aus natürlicher Faser, kultiviertem Kolloid, Cyclodextrin, Polymilchsäure und Gemischen davon.

**Revendications**

1. Fibre de polyamide biodégradable comprenant :

   • un polyamide possédant un delta d'hygroscopie, qui est la différence entre la vitesse d'absorption d'humidité du polyamide après 24 h à 30 °C et 90 % d'humidité relative (HR) et la vitesse d'absorption d'humidité du polyamide après 24 h à 20 °C et 65 % d'humidité relative (HR), d'au moins 4 %, le polyamide étant un polyamide 5.X, X étant un entier de 4 à 6, à condition que ces polyamides soient modifiés lorsqu'il est nécessaire pour atteindre un delta d'hygroscopie d'au moins 4 % ; ou un polyamide modifié chimiquement par ajout de modificateurs hydrophiles ; ou par copolymérisation dudit polyamide avec des groupes oxyéthylène ou des groupes polyétheramine ;
• un agent de biodégradation, l'agent de biodégradation comprenant au moins l'un des composants suivants :

a. un composé chimioattractif ou de chimiotaxie, qui est un sucre, une coumarine, une furanone ou des mélanges correspondants,
b. l'acide glutarique ou un dérivé de celui-ci,
c. un composé de type acide carboxylique, qui est l'acide hexadécanoïque,
d. un polymère biodégradable, qui est choisi parmi un poly(acide lactique), un poly(acide lactique-co-glycolique), un poly(carbonate de propylène), une polycaprolactone, un polyhydroxyalcanoate, un chitosane, un gluten, un ou plusieurs polyesters aliphatiques/aromatiques tels qu'un poly(succinate de butylène), un poly(succinate-adipate de butylène), un poly(succinate-sébaçate de butylène), ou un poly(téréphtalate-co-adipate de butylène), et des mélanges correspondants,
e. un agent de gonflement, choisi dans le groupe constitué par une fibre naturelle, un colloïde de culture, une cyclodextrine, un poly(acide lactique) et des mélanges correspondants.

2. Fibre de polyamide biodégradable selon la revendication 1, le polyamide étant choisi dans le groupe constitué par un polyamide 4, un polyamide 4.6, un polyamide 4.10 ; un polyamide 5.10 ; un polyamide 6, un polyamide 6.6, un polyamide 6.9, un polyamide 6.10 ; un polyamide 6.12 ; un polyamide 10.10 ; un polyamide 10.12 ; un polyamide 11 ; un polyamide 12 ; un polyamide 12.12 ; et des mélanges correspondants, qui sont modifiés par ajout de modificateurs hydrophiles tels que des polymères solubles dans l'eau comme une polyvinylpyrrolidone, des groupes polaires sulfonate tels qu'un acide sulfonique organique ; ou par copolymérisation dudit polyamide avec des groupes oxyéthylène ou des groupes polyétheramine.

3. Fibre de polyamide biodégradable selon la revendication 1, le polyamide étant un polyamide 5.6.

4. Fibre de polyamide biodégradable selon l'une quelconque des revendications 1 à 3, l'agent de biodégradation étant présent en une quantité variant de 0,5 % à 5,0 %, préférablement de 1,0 à 3,0 % en poids du poids total de la fibre de polyamide.

5. Fibre de polyamide biodégradable selon l'une quelconque des revendications 1 à 4, l'agent de biodégradation comprenant l'acide glutarique ou un dérivé correspondant, préférablement l'acide propylglutarique.

6. Procédé pour l'obtention d'une fibre de polyamide biodégradable telle que définie dans l'une quelconque des revendications 1 à 5, la fibre de polyamide étant obtenue par extrusion par filage par fusion d'au moins :

• le polyamide possédant un delta d'hygroscopie d'au moins 4 %,
• l'agent de biodégradation.

7. Procédé selon la revendication 6, l'extrusion par filage par fusion comprenant les étapes suivantes :

a1. alimentation du polyamide en tant que masse fondue, pastille ou poudre dans l'orifice d'entrée d'une extrudeuse à vis,
a2. fusion, homogénéisation et pressurisation du polyamide,
a3. filage du polyamide fondu en une fibre,
a4. refroidissement de la fibre et enroulement,
l'agent de biodégradation étant introduit de manière continue et de manière homogène pendant l'étape a1. sous une forme liquide, de pastille ou de poudre, préférablement en utilisant un appareil d'ajout.

8. Article de polyamide comprenant une fibre de polyamide biodégradable telle que définie dans l'une quelconque des revendications 1 à 5 ou obtenue par le procédé tel que défini dans l'une quelconque des revendications 6 et 7, l'article de polyamide étant une fibre, une fibre discontinue, un flocage, un tissé, un tissu tricoté ou non tissé ou un article textile fabriqué.

9. Utilisation dans une fibre de polyamide d'un polyamide possédant un delta d'hygroscopie d'au moins 4 %, qui est la différence entre la vitesse d'absorption d'humidité du polyamide après 24 h à 30 °C et 90 % d'humidité relative (HR) et la vitesse d'absorption d'humidité du polyamide après 24 h à 20 °C et 65 % d'humidité relative (HR), en combinaison avec un agent de biodégradation afin d'améliorer les propriétés de biodégradabilité de la fibre de polyamide fabriquée à partir de celle-ci, le polyamide étant un polyamide 5.X, X étant un entier de 4 à 6, à condition que ces polyamides soient modifiés lorsqu'il est nécessaire pour atteindre un delta d'hygroscopie d'au moins 4 % ; ou un polyamide modifié chimiquement par ajout de modificateurs hydrophiles ; ou par copolymérisation dudit polyamide avec des groupes oxyéthylène ou des groupes polyétheramine ; et l'agent de biodégradation comprenant au moins l'un des composants suivants :

a. un composé chimioattractif ou de chimiotaxie, qui est un sucre, une coumarine, une furanone ou des mélanges correspondants,

b. l'acide glutarique ou un dérivé de celui-ci,

c. un composé de type acide carboxylique, qui est l'acide hexadécanoïque,

d. un polymère biodégradable, qui est choisi parmi un poly(acide lactique), un poly(acide lactique-co-glycolique), un poly(carbonate de propylène), une polycaprolactone, un polyhydroxyalcanoate, un chitosane, un gluten, un ou plusieurs polyesters aliphatiques/aromatiques tels qu'un poly(succinate de butylène), un poly(succinate-adipate de butylène), un poly(succinate-sébaçate de butylène), ou un poly(téréphtalate-co-adipate de butylène), et des mélanges correspondants,

e. un agent de gonflement, choisi dans le groupe constitué par une fibre naturelle, un colloïde de culture, une cyclodextrine, un poly(acide lactique) et des mélanges correspondants.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2842406 A1
- CN 1490443 A
- US 20080103232 A, Lake